# EUROPÄISCHE PATENTSCHRIFT

(11) **EP 0 592 819 B1**
(45) Veröffentlichungstag und Bekanntmachung des Hinweises auf die Patenterteilung: **27.11.1996**
(21) Anmeldenummer: 93114687.2
(22) Anmeldetag: 13.09.1993
(51) Int. Cl.: B60M 1/18

(54) **Streckentrenner mit Isolierkufen**
Section insulator with isolating runners
Isolateur de section avec patins isolants

(30) Priorität: 11.09.1992 DE 9212264 U
(43) Veröffentlichungstag der Anmeldung: 20.04.1994
(73) Patentinhaber: SIEMENS AKTIENGESELLSCHAFT, 80333 München (DE); STUTTGARTER STRASSENBAHNEN AKTIENGESELLSCHAFT, D-70565 Stuttgart (DE)
(72) Erfinder: Müller-Gerlach, Peter, Dipl.-Ing. (FH), D-75217 Birkenfeld (DE); Glitz, Karl-Heinz, Dipl.-Ing., D-70184 Stuttgart (DE)
(74) Vertreter: Fuchs, Franz-Josef, Dr.-Ing.

(56) Entgegenhaltungen:
- DE-A- 1 515 326
- DE-A- 2 238 683

## Beschreibung

Die Erfindung bezieht sich auf einen Streckentrenner gemäß Oberbegriff des Anspruchs 1.

Ein derartiger Streckentrenner ist durch die DE-A-15 15 326 bekannt. Bei diesem Streckentrenner sind die Leitkufen (Kontaktschienen) über jeweils ein stabförmiges Element mit der Anschlußvorrichtung (Querstück) elektrisch und mechanisch verbunden. Die Lichtbogenhörner (Funkenhörner) werden von den Fahrdrahtenden gebildet, die unmittelbar nach den Querstücken nach oben gebogen sind. Aufgrund der mechanischen Anordnung der Leitkufen am Querstück neigen die Leitkufen zum Schwingen, was relativ häufig zu Lichtbogenbildungen zwischen den Leitkufen und dem Querstück einerseits und zwischen den Leitkufen und der Schleifleiste des Stromabnehmers andererseits führt. Die schwingenden Leitkufen führen darüber hinaus dazu, daß in ungünstigen Fallen der gesamte Streckentrenner in Schwingungen versetzt wird.

Weitere Streckentrenner sind aus der DE-C-30 45 258 sowie aus der EP-B-0 052 176 bekannt.

Aufgabe der Erfindung ist es, bei solchen Streckentrennern, insbesondere auch mit elektronisch gesteuerter Triebstromzuführung, beim Befahren auftretende Lichtbogenerscheinungen und die damit verbundenen Verschleißerscheinungen an den Einstellbügeln sowie Lärmbelästigungen, insbesondere in der Nacht, gegenüber bisher merklich zu reduzieren.

Die Lösung der gestellten Aufgabe gelingt in Verbindung mit den Merkmalen des Oberbegriffs durch die im kennzeichnenden Teil des Anspruchs 1 angegebenen Merkmale.

In dieser Weise angeordnete und ausgebildete und mit dem einen Lichtbogenhorn galvanisch verbundene Leitkufen verringern bereits in erheblichem Maße Lichtbogenerscheinungen und die damit verbundenen Nachteile.

Ein zusätzlicher Fortschritt in dieser Richtung wird auch durch die Maßnahme des Anspruchs 4 in vorteilhafter Ausgestaltung der Erfindung erreicht.

Auch die Maßnahmen der Ansprüche 6 und 7 tragen in weiterer vorteilhafter Ausgestaltung der Erfindung zu einer weiteren Reduzierung bei.

Das gleiche gilt auch, wenn das jeweilige Lichtbogenhorn z.B. gemäß den Ansprüchen 8 bzw. 9 ausgebildet wird.

Während bereits jeder einzelne Schritt für sich oder in Unterkombinationen schon gegenüber dem stand der Technik erhebliche Vorteile bringt, so führt die Kombination aller Maßnahmen zu einem optimalen Ergebnis.

Weitere Vorteile und Einzelheiten der Erfindung ergeben sich aus der nachfolgenden Beschreibung eines Ausführungsbeispiels anhand der Zeichnung und in Verbindung mit weiteren Unteransprüchen.

Es zeigen
- Figur 1: einen Streckentrenner gemäß der Erfindung in Seitenansicht,
- Figur 2: eine Draufsicht links der Schnittlinie II-II,
- Figur 3: einen Schnitt III-III durch den Streckentrenner der Figur 1,
- Figur 4: eine vorteilhafte Alternativausbildung der Lichtbogenhörner mit entsprechend modifizierter Einstellvorrichtung,
- Figur 5: einen Schnitt V-V durch die Alternativausbildung der Figur 4.

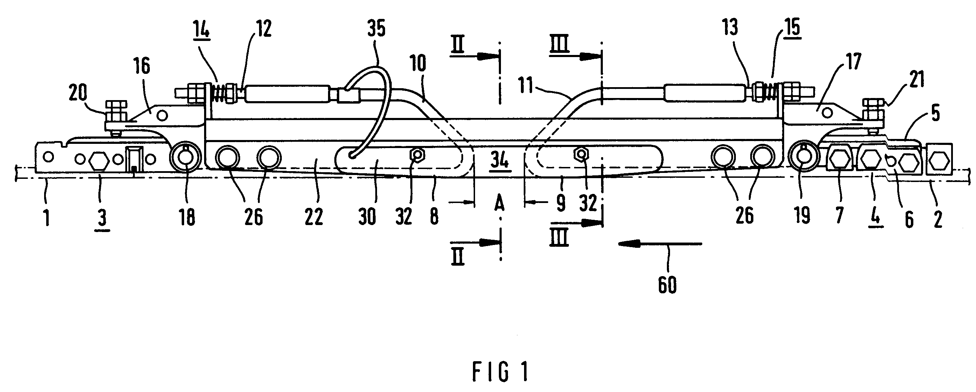

Gemäß der Figur 1 werden die Enden 1 und 2 des Fahrdrahtes mit dem erfindungsgemäßen Streckentrenner isolierend überbrückt. Der Streckentrenner besitzt zu diesem Zweck auf jeder Seite eine Fahrdrahtendklemme 3 bzw. 4. Diese umfaßt, wie aus der rechten Seite der Figur 1 ersichtlich ist, je einen Klemmkörper 5 und Klemmbacken 6 für das jeweilige Ende 1,2 des Fahrdrahtes sowie 7 für die jeweilige elektrisch leitende Auflaufkufe 8 bzw. 9 des jeweiligen Lichtbogenhornes 10 bzw. 11 eines Lichtbogenhornpaares. Der rückgebogene Lichtbogenteil 12,13 ist mittels einer Schraubfederverbindung 14 bzw. 15 am oberen Teil eines Abfangstückes 16 bzw. 17 in horizontaler Richtung verstellbar angeordnet. Das Abfangstück 16 bzw. 17 ist an der Fahrdrahtendklemme 3 bzw. 4 durch einen Bolzen 18,19 angelenkt und liegt an seinem rechten Ende mittels eines Schraubbolzens 20 bzw. 21 auf dem Klemmkörper 4 auf. Die Fahrdrahtendklemmen 3,4 zu beiden Seiten des Streckentrenners sind über zwei parallele Isolierkufen 22,23 mit Lichtbogenschutz 24 und 25 miteinander verbunden (über Schraubverbindungen 26,27).

Gemäß der Erfindung sind nun zu beiden Seiten des Streckentrenners parallel zu den Isolierkufen 22 und 23, wie in den Figuren 1 bis 3 dargestellt, je eine metallische (z.B. Cu) Leitkufe 30,31 (an den beiden Enden jeweils stark abgerundet) mittels Schrauben 32,33 angeordnet. Diese Leitkufen 30 und 31 überbrücken leitend die Trennstelle 34 zwischen den Lichtbogenhörnern 10,11. Jede Leitkufe 30,31 ist über einen Metallbügel 35,36 (z.B. Cu) mit einem der beiden Lichtbogenhörner, im vorliegenden Fall mit dem linken Lichtbogenhorn 10, leitend verbunden. Die Länge der jeweiligen Leitkufe 30 bzw. 31 ist so gewählt, daß die Trennstelle 34 hinreichend gut überbrückt wird. Derartige in dieser Weise ausgebildete und angeordnete Leitkufen unterdrücken bereits in starkem Maße unerwünschte Lichtbogenerscheinungen zwischen den Lichtbogenhörnern 9,10.

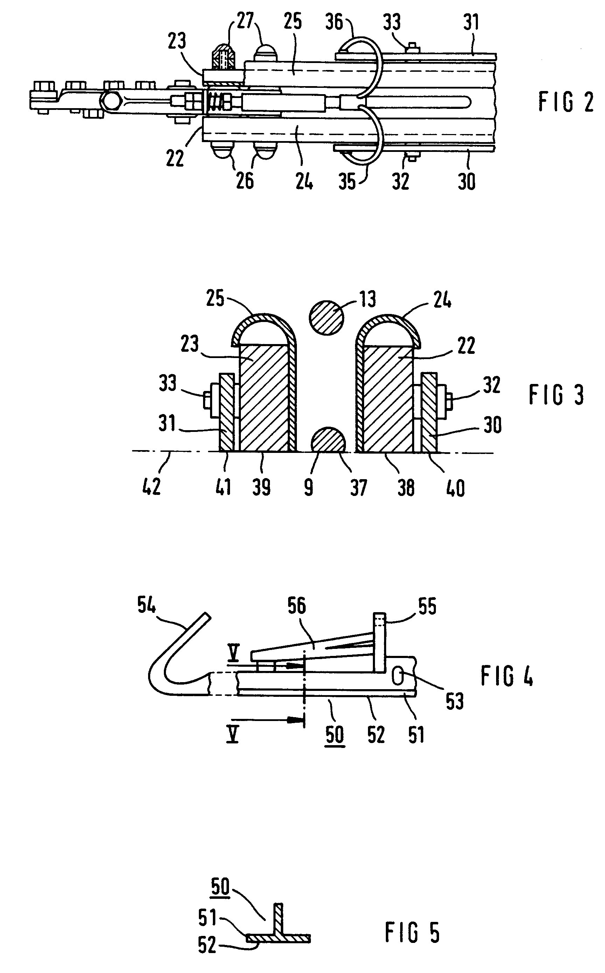

Eine weitere Verbesserung wird erreicht, wenn, wie der Figur 3 bzw. auch der T-Form der Figuren 4 und 5 näher entnehmbar ist, die Auflaufkufen 8,9 bzw. 51 der Lichtbogenhörner 10,11 bzw. 50 an der Unterseite 37 bzw. 52 nicht mehr rund, sondern jetzt flach ausgebildet sind. Dadurch vergrößert sich die Anlagefläche beim Hindurchgleiten eines Stromabnehmers, was wiederum zu einem günstigeren Verhalten bei der Lichtbogenerzeugung führt. Vorteilhafterweise liegt diese flache Unterseite 37 bzw. 52 der Auflaufkufe 8,9 bzw. 51 der Lichtbogenhörner 10,11 bzw. 50 zusammen mit den ebenfalls jeweils flachen Unterseiten 38 bis 41 der Isolierleisten einschließlich Lichtbogenschutz sowie der Leitkufen in einer Ebene, die die Befahrungsebene 42 eines Stromabnehmers ist.
In weiterer vorteilhafter Ausgestaltung sind an der Trennstelle 34 die beiden abgerundeten Spitzen der beiden Lichtbogenhörner 10,11 bis auf eine Minimaldistanz von ca. 60 mm voneinander entfernt angeordnet (beim Stand der Technik unterschreitet dieser Abstand in der Trennstelle nicht die 100 mm).

Eine Alternative zum Einstellbügel der Figuren 1 bis 3 zeigen die Figuren 4 und 5. Hier sind die Lichtbogenhörner 50 in der dargestellten Weise ausgebildet. Sie bestehen also im wesentlichen aus einer T-förmigen, unten flachen (52) Auflaufkufe 51 mit Langloch 53 am rechten Ende sowie einer abgebrochenen, abgerundeten Spitze 54 am anderen Ende. Die Höheneinstellung erfolgt in ähnlicher Weise wie in den Figuren 1 bis 3 über eine Schraubfederverbindung durch das Loch 55 über das Verbindungsteil 56. Die Verbindung der Auflaufkufe 50 mit den Fahrdrahtendklemmen 3,4 erfolgt wieder über die Klemmbacke 7 in Verbindung mit dem Langloch 53.

Der Pfeil 60 deutet beispielsweise die Fahrtrichtung des Stromabnehmers des elektrischen Fahrzeugs an. Die Leitkufen 30,31 sind also mit dem in Fahrtrichtung der Bahn auflaufenden Lichtbogenhorn galvanisch verbunden.

## Patentansprüche

1. Streckentrenner für Fahrleitungen elektrischer Fahrzeuge, insbesondere Bahnen, mit je einer Anschlußvorrichtung (3,4) für das jeweilige Fahrdrahtende (1,2) einerseits und dem jeweiligen Lichtbogenhorn (10,11 bzw. 50) eines Lichtbogenhornpaares andererseits, wobei die Anschlußvorrichtungen (3,4) über Isolierkufen (22,23) derart miteinander verbunden sind, daß sich die Lichtbogenhörner an einer Trennstelle (34) isoliert gegenüberstehen, wobei an der Trennstelle wenigstens zwei diese überbrückenden Leitkufen (30,31) angeordnet sind,
**dadurch gekennzeichnet,**
daß die Leitkufen (30,31) jeweils mit einer der Isolierkufen (22 bzw.23) mechanisch verbunden und beide mit einem der Lichtbogenhörner (10) elektrisch leitend (35,36) verbunden sind.

2. Streckentrenner nach Anspruch 1,
**dadurch gekennzeichnet,**
daß das Lichtbogenhornpaar beidseitig von je einer Isolierkufe (22,23) eingeschlossen ist und wobei beidseitig auf jede Isolierkufe eine Leitkufe (30,31) folgt und beide Leitkufen mit einem der Lichtbogenhörner (10) leitend verbunden sind.

3. Streckentrenner nach Anspruch 1 oder 2,
**dadurch gekennzeichnet,**
daß die Isolierkufen (22,23) und Leitkufen (30,31) zueinander parallel und auch parallel zu den Lichtbogenhörnern (10,11 bzw. 50) des Lichtbogenhornpaares angeordnet sind.

4. Streckentrenner nach einem der Ansprüche 1 bis 3,
**dadurch gekennzeichnet,**
daß jedes Lichtbogenhorn eine flach (37 bzw. 52) ausgebildete Auflaufkufe umfaßt.

5. Streckentrenner nach Anspruch 4,
**dadurch gekennzeichnet,**
daß die flach (37 bzw. 52) ausgebildete Auflaufkufe der Lichtbogenhörner mit den ebenfalls im Auflaufbereich flach (38-41) ausgebildeten Isolier- und Leitkufen im wesentlichen in einer Ebene, nämlich der Befahrungsebene (42) des Stromabnehmers des elektrischen Fahrzeuges liegt.

6. Streckentrenner nach einem der Ansprüche 1 bis 5,
**dadurch gekennzeichnet,**
daß die von der jeweiligen Leitkufe (30,31) überbrückte Trennstelle (34) zwischen den einander zugewandten Lichtbogenhörnern (10,11 bzw. 50) auf einen Minimalabstand eingestellt ist.

7. Streckentrenner nach Anspruch 6,
**dadurch gekennzeichnet,**
daß der Minimalabstand kleiner als 100 mm, vorzugsweise in der Größenordnung 60 mm, gewählt ist.

8. Streckentrenner nach einem der Ansprüche 4 bis 7.
**dadurch gekennzeichnet,**
daß das jeweilige Lichtbogenhorn (50) im Querschnitt T-förmig ausgebildet ist und der flache Querbalken (51) die flache Auflaufkufenfläche (52) bildet.

9. Streckentrenner nach einem der Ansprüche 1 bis 8,
**dadurch gekennzeichnet,**
daß die Spitze (54) des jeweiligen Lichtbogenhorns (50) abgebrochen ist.

## Claims

1. Section isolator for contact lines of electric vehicles, in particular trains, having a respective connecting arrangement (3, 4) for the respective contact wire end (1, 2) on the one hand and the respective arcing horn (10, 11 or 50) of a pair of arcing horns on the other hand, with the connection arrangements (3, 4) being connected with each other by way of insulating runners (22, 23) in such a way that the arcing horns are arranged opposite each other at an isolating point (34) in an insulated manner, with at least two conductive runners (30, 31), which bridge the isolating point, being arranged at this isolating point, characterised in that the conductive runners (30, 31) are respectively mechanically connected with one of the insulating runners (22 and 23 respectively) and both are connected with one of the arcing horns (10) in an electrically conductive manner (35, 36).

2. Section isolator according to claim 1, characterised in that the pair of arcing horns is enclosed on both sides by a respective insulating runner (22, 23) and wherein on both sides a conductive runner (30, 31) follows each insulating runner and both conductive runners are conductively connected with one of the arcing horns (10).

3. Section isolator according to claim 1 or 2, characterised in that the insulating runners (22, 23) and conductive runners (30, 31) are arranged so as to be parallel to each other and also so as to be parallel to the arcing horns (10, 11 or 50 respectively) of the pair of arcing horns.

4. Section isolator according to one of the claims 1 to 3, characterised in that each arcing horn comprises a run-up runner which is formed so as to be flat (37 or 52 respectively).

5. Section isolator according to claim 4, characterised in that the run-up runner of the arcing horns, which runner is formed so as to be flat (37 or 52 respectively), with the insulating runners and conductive runners, which are likewise formed so as to be flat in the run-up area (38-41), substantially lie in one plane, namely the passage plane (42) of the current collector of the electric vehicle.

6. Section isolator according to one of the claims 1 to 5, characterised in that the isolating point (34), which is bridged by the respective conductive runner (30, 31) between the facing arcing horns (10, 11 or 50 respectively), is set at a minimum distance.

7. Section isolator according to claim 6, characterised in that the selected minimum distance is less than 100 mm, preferably in the order of magnitude of 60 mm.

8. Section isolator according to one of the claims 4 to 7, characterised in that the respective arcing horn (50) is formed so as to be T-shaped in cross section and the flat cross bar (51) forms the flat run-up runner surface (52).

9. Section isolator according to one of the claims 1 to 8, characterised in that the tip (54) of the respective arcing horn (50) is truncated.

## Revendications

1. Isolateur de section de caténaires de véhicules électriques, notamment de voies, comportant un dispositif (3, 4) de raccordement destiné à l'extrémité (1, 2) associée de fil de contact d'une part et le cornet (10, 11, respectivement 50) de garde associé d'une paire de cornets de garde d'autre part, les dispositifs (3, 4) de raccordement étant reliés entre eux par l'intermédiaire de barres (22, 23) isolantes de manière que les cornets de garde se fassent face en un point (34) de séparation en étant isolés, au moins deux barres (30, 31) conductrices le shuntant le point de séparation y étant montées, caractérisé en ce que les barres (30, 31) conductrices sont reliées mécaniquement chacune à l'une des barres (22 et 23) isolantes et, toutes deux, de manière conductrice (35, 36) de l'électricité à un des cornets (10) de garde.

2. Isolateur de section suivant la revendication 1, caractérisé en ce que la paire de cornets de garde est entourée de part et d'autre d'une barre (22, 23) isolante, et, de part et d'autre, une barre (30, 31) conductrice suivant chaque barre isolante et les deux barres conductrices étant reliées de manière conductrice à un des cornets (10) de garde.

3. Isolateur de section suivant la revendication 1 ou 2, caractérisé en ce que les barres (22, 23) isolantes et les barres (30, 31) conductrices sont montées parallèlement les unes aux autres et parallèlement au cornets (10, 11 et 50) de garde de la paire de cornets de garde.

4. Isolateur de section suivant une des revendications 1 à 3, caractérisé en ce que chaque cornet de garde comporte une barre d'entrée plane (37 et 52).

5. Isolateur de section suivant la revendication 4, caractérisé en ce que la barre d'entrée plate (37 et 52) des cornets de garde se trouve, conjointement avec les barres isolantes et conductrices qui sont également planes (38 à 41) dans la région d'entrée, sensiblement dans un plan, à savoir dans le plan (42) de passage de l'appareil de prise de courant du véhicule électrique.

6. Isolateur de section suivant une des revendications 1 à 5, caractérisé en ce que le point (34) de séparation shunté par les barres (30, 31) conductrices est réglé entre les cornets (10, 11 et 50) tournés l'un vers l'autre à une distance minimale.

7. Isolateur de section suivant la revendication 6, caractérisé en ce que la distance minimale est choisie inférieure à 100 mm, de préférence de l'ordre de grandeur de 60 mm.

8. Isolateur de section suivant une des revendications 4 à 7, caractérisé en ce que le cornet (50) de garde associé a une section transversale en forme de T et en ce que la traverse (51) plane forme la surface (52) de barre d'entrée.

9. Isolateur de section suivant une des revendications 1 à 8, caractérisé en ce que la pointe (54) du cornet (50) de garde associé est tronquée.
